# EUROPEAN PATENT SPECIFICATION

(11) **EP 4 165 383 B1**
(45) Date of publication and mention of the grant of the patent: **15.04.2026**
(21) Application number: 21735428.1
(22) Date of filing: 14.06.2021
(51) Int. Cl.: G01L 1/24

(54) **TWO-DIMENSIONAL OPTICAL WAVEGUIDE PRESSURE SENSOR ARRAY**
ZWEIDIMENSIONALE LICHTWELLENLEITER-DRUCKSENSORANORDNUNG
RÉSEAU DE CAPTEURS DE PRESSION DE GUIDES D'ONDES OPTIQUES BIDIMENSIONNEL

(30) Priority: 14.06.2020 US 202063038892 P
(43) Date of publication of application: 19.04.2023
(73) Proprietor: Luxisens Technologies B.V., 8221 EC Den Bosch (NL)
(72) Inventor: VAN DEN BOOM, Henricus Petrus Anna, Oisterwijk (NL); KOONEN, Antonius Marcellus Jozef, Nuenen (NL)
(74) Representative: DTS Patent- und Rechtsanwälte PartmbB
(86) International application number: PCT/NL2021/050374
(87) International publication number: WO 2021/256921

(56) References cited:
- CN-A- 107 490 445
- US-A1- 2019 064 012

## Description

### FIELD OF THE INVENTION

The invention relates in general to an optical waveguide pressure sensor array, and more in particular to a two-dimensional pressure sensing system using polymer optical fibers in an optical waveguide pressure sensor array configuration.

### BACKGROUND

Pressure sensing systems which provide two-dimensional location information are known for example from US 4,733,068 and US 2019/0302879. From these publications it is known to use fiber optic sensors arrays to measure the spatial distribution of the pressure applied in a two-dimensional structure. Such two- dimensional pressure sensor systems are in particular suitable for measuring and monitoring the specific location and movement of objects and/or persons.

Furthermore, CN107490445A discloses a force sensor.

US2019/064012A1 discloses a 2-dimensional optical waveguide structure including two or more row optical waveguides and two or more column optical waveguides, arranged in a planar array to define crossing sensors. Each crossing sensor includes one of the row waveguides in contact with one of the column waveguides at an intersection point. Also, each crossing sensor is provided with a mechanical structure in the shape of a rigid ring, configured to enhance waveguide bending when pressure is applied to the crossing sensor. A single rigid ring can be provided at each waveguide intersection, i.e. the crossing sensor. Alternatively, two rigid rings can be provided, sandwiching the waveguide intersection.

A pressure sensing system in which the sensor array is configured by optical fibers and in which those optical fibers are Polymer Optical Fibers (POFs) is advantageous for being cheap, robust, flexible and insensitive for Electro Magnetic Interference (EMI). In such a pressure sensing system a grid of fibers may be provided in which the fibers provided in one direction are connected to optical sources (in particular Light Emitting Diodes (LEDs)), and in which the fibers provided in the transverse direction are connected to highly-sensitive optical receivers. At a crossing, some light from one fibre may couple into the crossing one. Because this optical power coupling depends on the pressure exerted on the crossing, each of these crossing points of the grid can act as a local pressure sensor. Such a pressure sensing system requires modification of sensors in the array to provide sufficiently sensitive pressure- dependent optical coupling. To achieve such sufficient pressure-dependent optical coupling, and thereby improve transfer characteristics of the sensor system, the sensors may have additional mechanical structures which are configured to enhance the waveguide bending and thereby improve the transfer characteristics. Such mechanical structures are ring-shaped, but these require precise alignment with the intersections of the fibers which increases complexity of the system.

Accordingly, it would be advantageous to achieve a pressure sensing system using POF as optical waveguides with a lower level of complexity at a high level of accuracy.

### SUMMARY

In a first aspect of the present disclosure, a two-dimensional optical waveguide pressure sensor array is provided as defined in claim 1, comprising: two or more row optical waveguides;
two or more column optical waveguides, wherein the row optical waveguides and the column optical waveguides are deformable and arranged in a planar array to define a sensor in the crosspoints, wherein each crosspoint includes one of the row waveguides in direct contact with one of the column waveguides at its intersection point;
wherein each crosspoint further includes a respective light coupling structure in the shape of a patch, said coupling structure being configured to enhance waveguide bending when pressure is applied to the crosspoint;
wherein the light coupling structure comprises a layer of mechanical light scattering material disposed in contact with at least one of the row or column optical waveguide;
wherein the light coupling structure has a closed structure in which in the centre of said closed structure a deformable material is arranged,
wherein the optical waveguide pressure sensor array is configured to sense pressure by providing light to the row optical waveguides and measuring light coupled at each crosspoint to its column optical waveguide, or vice versa, and wherein the light coupled to the column optical waveguide is dependent on the pressure applied to the crosspoint acting as a sensor, and
wherein the light coupling structure further comprises a layer of rigid material.

What is provided is a two-dimensional optical waveguide pressure sensor array. With such a pressure sensor array the two-dimensional spatial distribution of pressure of objects and/or persons a on a certain structure can be measured. To this end, the system provided optical waveguides, preferably Polymer or Plastic Optical Fibers (POF).

The optical waveguides, further referred to as POFs are provided in a two-dimensional grid of N x M fibers defining N x M sensors, comprising at least two rows and at least two columns. The skilled person will recognize that in a preferred embodiment the number of rows and columns is far larger than the 2 x 2 grid, e.g. a 8 x 8 grid, 16 x 16 grid, 32 x 32 grid, 64 x 64 grid or with different number of rows and columns like a 8 x 16 grid or a 16 x 32 grid.

POF is commonly used for low-speed, short-distance optical data communication and is robust, flexible, and insensitive for Electro Magnetic Interference (EMI). POF is cheap and due to its relatively large core and cladding diameters, easy to handle and easy to couple light into. Being made of a ductile polymer (e.g. PMMA), it is not as brittle as silica fibre, and when stretched it does not break but is just elongated. For interconnecting two POFs, low precision connectors may be used, and may even be skipped, i.e. interconnecting by simply cleaving and butt-joining the POFs. The large core diameter also reduces the impact of small scratches or dust particles on the fibre's endface. Because of its bending-sensitive properties, augmented by its ductility, POF can also be used for sensing.

A two-dimensional (2-D) POF based pressure sensor array based on only detecting attenuation in a POF is in principle not possible, only with complicated fibre grids. In a 2-D grid of crossing POFs, with N POFs running in the x direction and M POFs in the y-direction, M x N crossings are obtained which cannot be detected individually by measuring only the attenuation variation of each of the POFs in the x and y directions, so N + M loss measurement values. Also POF pressure sensing using Fiber Bragg gratings is fundamentally a complicated and expensive technique.

The proposed system has a grid of POFs where fibres in one direction are connected to light sources and fibres in the perpendicular direction are connected to highly-sensitive optical receivers. At a crossing, where the fibers are preferably not modified, a very small amount of light from one fibre may couple into the crossing one. Because this very small optical power coupling depends on the pressure exerted on the crossing, each fibre crossing of the grid can act as a pressure sensor of which the light coupled at the crosspoint or crossing is dependent on the pressure applied to the corresponding crossing. More preferably, there is a proportional, and more preferably linear relation between light being coupled and the pressure applied to the crossing.

The proposed low-cost and robust 2-D optical pressure sensor principle can be used for many applications, such as:
- for long-term unobtrusive and precise sleep movement monitoring in a non-clinical (home) situation,
- in a Virtual Reality (VR) floor mat to detect the exact location of the persons or gamers so these persons stay in the right region,
- it can be applied under (or woven into) a carpet or under for instance a PVC floor for privacy friendly fall detection of (elderly) persons.
- or to detect movements of a person during MRI scanning, this optical detection method is immune for even very strong magnetic and RF fields,
- for monitoring precise pressure profiles of persons in bed with limited movement to prevent pressure injury (e.g., decubitus),
- in adaptive mattresses where local pressure is controlled automatically to improve sleep comfort.

Known two-dimensional optical waveguide pressure sensor arrays based on POFs require light coupling structures in the form of small ring shaped elements to enhance the waveguide bending of the POF. Although the addition of the ring shaped elements may enhance waveguide bending and thereby improve transfer characteristics, it also has the disadvantages of adding complexity due to the required precise alignment of each ring with the intersections of the fibers.

It was the insight of the inventors to realise that in order to realize sufficient pressure-dependent optical coupling which can be detected, while the constituting fibres do not need to be modified but are left unchanged and the light coupling structures do not need to be ring-shaped, light coupling structures may be used in the form of small patches of light scattering material of various shapes and size which are advantageously applied at each fibre crosspoint. The positioning of the patch with respect to the crosspoint does not need a high accuracy, whereas the position of a ring needs to be accurate.

The light coupling structure is further preferably flexible, and for example comprises a white silicone rubber. With a light coupling structure having a layer of flexible light scattering material the optical coupling can be detected in an improved manner. More particularly, the proposed light coupling structure allows for a more linear transfer characteristics which not only makes the sensor more accurate, but also simplifies the read-out.

It has be recognized that with the proposed system based on POF with a light coupling structure having one or more layers of light scattering material the transfer characteristics of the sensor are improved without adding complexity, because a light coupling structure with (preferably flexible) light scattering material, causes not only macro-bending (with a particular minimum bending radius of the fiber at which the light will exit the core through the cladding), but also micro-bending which occurs when fibers touch and as a result causes distortions in the fiber at which a small amount of light will exit the core through the cladding. The fact that only a small amount of light exits the core through the cladding is advantageous as the majority of the light will remain in the core and will thus go on to the next crossing point or sensor where the intensity is thus hardy reduced. Hence, the sensitivity of any further crossing point is hardly affected by the pressure applied to a particular crossing point. That makes the system well-scalable to larger 2-D matrices.

With a light coupling structure that is flexible and is not as the known light coupling structures configured as a rigid ring shaped mechanical element, the fibers will have the tendency to demonstrate more micro-bending and less macro-bending. The use of a light scattering material layer will improve the transfer characteristics since the little amount of light exiting the core through the cladding will have a higher likelihood of coupling via the scattering material into the core of the crossing fiber.

Because of the use of POF, the proposed optical 2-D sensing method is robust, fast, flexible, waterproof, is not affected by external electrical fields, nor does it generate any electrical fields itself. The method is scalable because many sensor points can be detected with a limited number of LEDs and optical receivers. It is low-cost because POF itself as well as the light-scattering patches are inexpensive, easy to configure and assemble, and readily available optical and electrical components can be used.

In examples of the present disclosure the pressure-sensitive optical coupling mechanism allows construction of a crossing where the fibres are not modified so are left intact and are very alignment tolerant which makes the POF grid easy to manufacture at low cost. Depending on the size of the patches, different transfer characteristics can be realized, from exponential to more linear to even logarithmic dependency on the local pressure in order to realize large detection ranges. With the rigid ring construction only an exponential characteristic can be obtained, which is only an advantage if you want to detect pressure yes or no above a certain threshold level. The flexible (rubber) material also protects the fibres against permanent damage by absorbing large forces so robustness is improved.

In an example, the light coupling structure comprises two layers of light scattering material disposed in contact with and on both sides of the row and column optical waveguides wherein the row and column optical waveguides are vertically disposed between, or sandwiched by, the two layers of light scattering material.

The light coupling structures may according to several embodiment of the present disclosure be applied on both sides of the row and column optical waveguides, and may have a layer of light scattering material either on one side, on both sides, and may have flexible material on none of the sides, at one side or on both sides. In the most preferred embodiment, providing the best transfer characteristics, the light coupling structures are applied on both sides, and have flexible, light scattering material on both sides.

In an example, the two layers of light scattering material are substantially of the same size and shape, and are substantially laterally aligned.

Although the top and bottom layer of light scattering material may differ in size and shaped, in the preferred embodiment with improved transfer characteristics, these are at least substantially the same in size and shape and are laterally aligned.

In an example, each row optical waveguide includes a waveguide core surrounded by a waveguide cladding, and each column optical waveguide includes a waveguide core surrounded by a waveguide cladding, and wherein the waveguide claddings of both the row optical waveguides and the column optical waveguides are arranged for light transmissive contact at one or more of the crossing sensors.

In an example, each row optical waveguide includes a waveguide core surrounded by a waveguide cladding, and each column optical waveguide includes a waveguide core surrounded by a waveguide cladding, and wherein the ratio of the cross sectional diameter of the waveguide core with respect to the waveguide cladding is at least 50:1, preferably at least 75:1, more preferably at least 90:1 and most preferably approximately 100:1.

The cladding is at least sufficiently thin to such a degree that a non-negligible amount of light may be coupled from the core of one fiber to another crossing fiber. At an increased ratio between cross sectional diameter of the core to the cladding, the light has a higher tendency to couple into the crossing fiber. As such, the ratio may be at least 50:1 but more preferably is higher.

According to the invention, the light coupling structure comprises a layer of deformable material, wherein the deformable or flexible layer may be provided by the same material as material providing the light scattering effect. However, according to an example, also a separate layer may be added to the stack of the light coupling structure which provides solely for the deformation properties. In an example, the layer of deformable material comprises a silicone rubber. In a further example, the deformable material is selected or tuned to the transfer characteristics. What that means, is that the material is selected or tuned to optimize the transfer characteristics to such a degree that upon applying pressure to the sensors, i.e. the fiber crossing point, the fibers are bent smoothly causing mostly micro-bending and little macro bending such that the light is coupled depending on the size and shape of the patches an exponential, according to an at least mostly linear or logarithmic transfer characteristic.

In particular, according to the invention, said light coupling structures have a closed structure in which in the centre of said closed structure the deformable material is arranged.

According to the invention, the light coupling structure further comprises a layer of rigid material, such as polyvinylchloride.

In an example, the light coupling structure comprises two layers of light scattering material disposed in contact with and on both sides of the row and column optical waveguides, and two layers of rigid material disposed in contact with and on both sides of the two layers of light scattering material, vertically disposed between, or sandwiching the row and column optical waveguides and the two layers of light scattering material with the two layers of rigid material.

In an example, the light coupling structure is shaped according to one of the group of circular, oval, rectangular, square, rhombus, cross, diamond and polygon shapes and in particular, wherein said light coupling structures have various sizes, and in particular, wherein said light coupling structures having a cross-sectional diameter of approximately 0.5mm, 1.0mm, 1.5mm, 2.0mm, 2.5mm, 3.0mm.

The light coupling structures may have various shapes and various sizes. Moreover, the light coupling structures may have a cross-sectional diameter in the range between 0.5mm and 3.0mm. The light coupling structure of the present disclosure is a closed structure as compared to known ring shaped mechanical patches which are open at the crosspoint region such that the fibers are not in contact with the structure at the crosspoint region. As a result, the light coupling structure according to the present disclosure which is provided with deformable material, such as flexible silicon, will provide in addition to macro bending, scattering to the crosspoint region.

The dependency of the light coupling and the pressure applied may be further optimized by the shaping of the light coupling structure, e.g. by selecting a certain shape, layer thickness, size and material.

In an example, the row and column optical waveguides are selected from the group consisting of: step-index plastic fibers and graded-index plastic fibers.

In an example, the two-dimensional optical waveguide pressure sensor array is configured as a sleep monitoring sensor applied under a matrass for unobtrusive sleep-related movements of an individual on the matrass.

### BRIEF DESCRIPTION OF THE DRAWINGS

Fig. 1 shows a schematic diagram of a two-dimensional optical waveguide pressure sensor array according to a first aspect of the present disclosure;
Fig. 2 shows a top view and two side vies of a POF crossing with flexible material on both sides according to an aspect of the present disclosure;
Fig. 3 shows a top view and two side vies of a POF crossing with flexible material on one sides according to an aspect of the present disclosure;

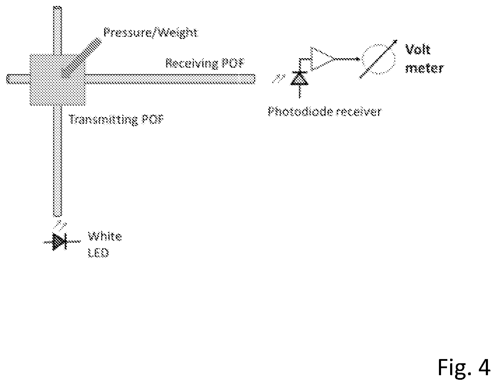

Fig. 4 shows a setup of measuring the sensitivity characteristics of a POF crossing according to an aspect of the present disclosure;
Fig. 5 shows a graph of a receiver output voltage as a function of applied weight in a comparative example without flexible material at the crossing;
Fig. 6 shows a graph of a receiver output voltage as a function of applied weight in an aspect of the present disclosure with flexible material at the crossing on both sides and at one side;
Fig. 7 show the influence of the size of the scattering material in an aspect of the present disclosure with light scattering material used on both sides;

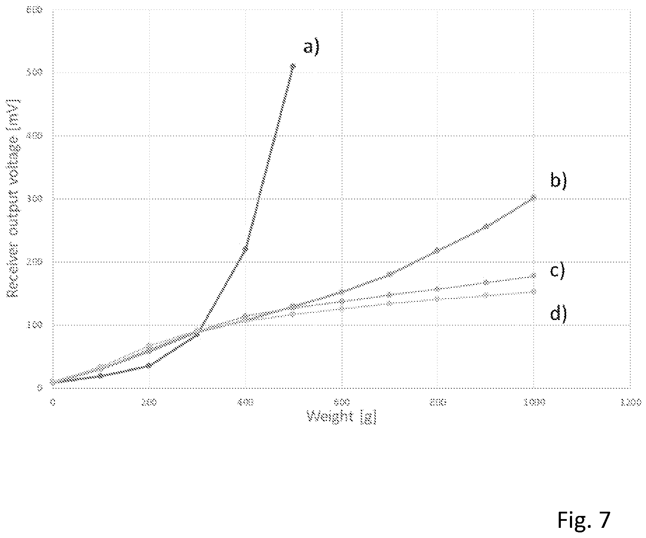

Fig. 7 show the influence of the size of the scattering material in an aspect of the present disclosure with light scattering material used on one side.

### DETAILED DESCRIPTION

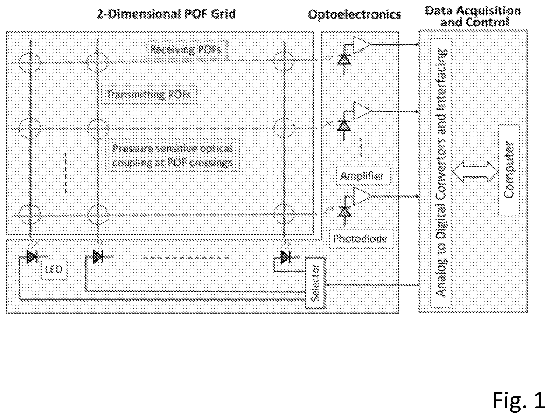

Fig. 1 shows a schematic diagram of a real-time 2-Dimensional (2D) pressure sensing system based on monitoring the local pressure exerted per crosspoint on a 2-D structure embedded in a 2-D surface, The system has a 2-D POF Grid, an Optoelectronics module and a Data Acquisition and Control module. The 2D POF Grid is composed of a grid of SI-POFs (step-index POFs) which form a matrix of crosspoints. The so-called transmitting fibres of the POF grid are connected to LEDs and the receiving fibres to photodiodes of the Optoelectronics module. The LEDs are part of the transmitting part of the Optoelectronics module, and the photodiodes are part of the receiving part of the Optoelectronics module. The Data Acquisition and Control module controls the LED transmitters and processes the measured data obtained from the photodiode receivers in the Optoelectronics module. The optical coupling between the POFs at the crosspoints is a function of the local pressure, so by detecting the optical power received by the photodiodes, the pressure on a crosspoint can be measured. Because the optical coupling effect between transmitting and receiving SI-POF fibres is very small, high-sensitivity optical receivers are needed, using transimpedance amplifiers (TIAs) with high gain and a high input impedance. Moreover, as only a small amount of light power is coupled out of the transmitting fibre when pressure is exerted on the respective crosspoint, the light which stays in the transmitting fibre and goes on to the next crosspoint is hardly reduced. Thus, the sensitivity of a crosspoint is hardly affected by the pressure on other crosspoints, i.e. the location-dependence of the performance of a crosspoint is negligible. This makes the system well-scalable to larger 2-D matrices. To achieve a simple and scalable system, a crosspoint scanning method is implemented. The Data Acquisition and Control module in Fig. 1 controls the Selector, which selects only one LED at a time, and the crossings are scanned column by column. Reading simultaneously the photodetector outputs line-by-line enables the Data Acquisition and Control module to do the 2D pressure detection. This solution is readily scalable because N photo detectors and M LED sources can detect N x M sensor points and wherein vertical columns are scanned one by one.

An innovative feature of the present disclosure is the design of the pressure-sensitive optical coupling mechanism and construction of a crossing where the fibres are not modified so are left intact. Moreover, the crosspoint design is very alignment tolerant because the scattering material which increases the sensitivity does not have to be precisely aligned at the crossing. This innovative crosspoint design makes the POF grid easy to manufacture at low cost. Two embodiments of the invention will now be described: a flexible scattering material on both sides of the crossing (above and below), and a flexible scattering material only at one side (above or below), which makes the construction thinner. Below these options are discussed including their measurement results.

### Option 1: Flexible scattering material on both sides.

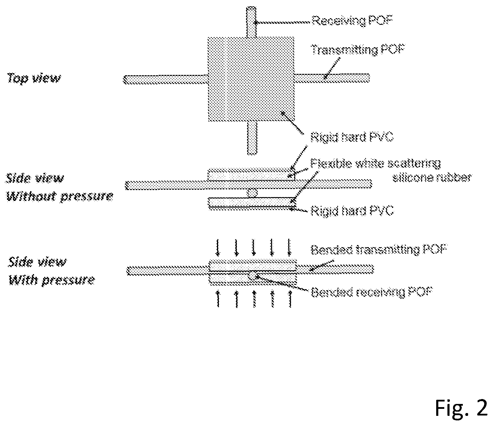

A Polymer Optical Fibre (POF) crossing is provided on both sides with a flexible light scattering material, for instance white silicone rubber of 10 x 10 x 1.5 mm³ and a thin rigid material, for instance hard PVC with a thickness of 0.3 mm, as shown in Fig. 2. PMMA (Polymethyl Methacrylate) POF is suitable for visible light with losses < 0.5 dB/m in the wavelength range between 400 and 700 nm. To improve the optical coupling, the flexible material should scatter the wavelengths of the light which is used as much as possible so and obviously have a low absorption factor at these wavelengths. So in case red light is used, flexible material red light should be used, and in case white light is used, flexible material scattering the wide white light spectrum (and hence looks from the outside as white material) should be used. In the experiments white LEDs and thus white flexible material is used, because other colours even ultraviolet did not give significant improvements. The ductility of the material must be reversible: the flexible material should take its original shape when the pressure has disappeared, so should be robust with no remaining deformation after large pressures have been applied. The flexibility and thickness of the material has also influence on the detection characteristics. Thicker material decreases the sensitivity. The flexibility of the scattering material and the POF should be such that, when pressure is applied vertically to the node, the flexible scattering material will press at both sides on both fibres and hence will smoothly bend the fibres a little bit. Also the physical contact area of both fibres with the flexible scattering material will increase. Due to micro-bending (because the fibres touch each other) and macro bending (because the fibres are smoothly bent), a small amount of light will escape from the transmitting fibre and couple into the receiving fibre. The amount of optical coupling is proportional to the applied pressure. The escaped light will be scattered in all directions in the (white) flexible scattering material and partially couple into the receiving fibre again, due to micro bending and macro bending of the fibres. The flexible material makes the sensor grid also very robust. The flexible material gives the fibres a smoother bending radius at the crossing when pressure is applied and forces are partly absorbed by the flexible material outside the fibre crossing. Without the flexible material and only rigid material, forces are concentrated on the crosspoint of the fibres which can cause permanent deformation. The rigid material concentrates the vertical pressure to the crossing.

### Option 2: Flexible scattering material at one side

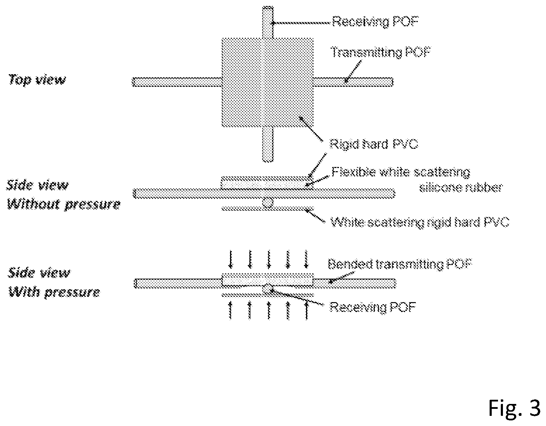

A Polymer Optical Fibre crossing is provided on one side (e.g., top) with a flexible light scattering material, for instance white silicone rubber and a thin rigid material, for instance hard PVC, as shown in Fig. 3. At the other side (e.g., bottom), the crossing is provided with a thin light scattering rigid material, for instance white hard PVC to concentrate vertical pressure to the crossing. In case the sensor is laying on a solid surface this rigid material is not necessary. The flexibility of the scattering material and the POF should be such that, when vertical pressure is applied, the receiving fibre will press and bend the transmitting fibre into the flexible scattering material. Also the physical contact of both fibres with the flexible scattering material will increase. Due to micro bending because the fibres touch each other and macro bending because the transmitting fibre is smoothly bent, a small amount of light will escape from the transmitting fibre and couple into the receiving fibre. The amount of optical coupling is proportional to the applied pressure. The escaped light will be scattered in all directions in the (white) flexible scattering material and the rigid (white) scattering material, and partially coupled into the receiving fibre. Again, the flexible material makes the sensor grid also very robust. The flexible material gives the fibres a smoother bending radius at the crossing when pressure is applied and forces are partly absorbed by the flexible material outside the fibre crossing. Without the flexible material and with only rigid material, forces are concentrated on the crosspoint of the **fibres which** can cause permanent deformation. The rigid material concentrates pressure to the crossing.

The proposed system has, in all or some aspects, the follows advantages:
- POF fibres are left in their original state, i.e., need no modification
- Although POFs are left un-modified, high sensitivity is provided because of micro-bending (POFs touch each other), macro-bending (fibre is bent at crossing) and scattering flexible material at crossing which touch the fibres,
- Very tolerant regarding the positioning of the flexible patch with respect to the crosspoint,
- Very robust because the flexible material protects the fibre crossing,
- Depending on the dimensions of the patches, different sensitivity characteristics can be realised, see measurement results below.

The POF fiber type may be a CK20, Mitsubishi Rayon, 0.5 mm diameter Step Index PMMA POF. The flexibility of the fibre has also influence on the pressure sensitivity of the optical coupling. From mechanics, it is known that the force needed to bend a rod increases with the rod's diameter. Therefore, the smaller the fibre diameter the more flexible the fibre is. So 0.5 mm diameter POF is more flexible and sensitive than the standard 1 mm diameter POF. Also the scattering losses of the fibre are important. The fibre must have relatively high scattering and low absorption losses to make a detectable optical signal power at the input of the receiver possible. Therefore silica glass optical fibres are not suitable because of the very low scattering losses of silica glass compared with POF. The fibre should also have a thin cladding to prevent influence of neighbouring crossings, so therefore graded index POF is also not suitable. The cladding diameter is preferably 500 µm and the core diameter 486 µm. The dimensions of the white silicone rubber material is preferably 10 x 10 x 1.5 mm³. And the optical power coupled by the white LED into the transmitting POF > 1 mW. This power depends on the fibre core's diameter and in general the power from an LED coupled into the fibre is higher with larger fibre core diameters. The sensitivity of the photodiode receiver is preferably 0.4 V/nW.

### Measurement results

### A. Without flexible material at the crossing

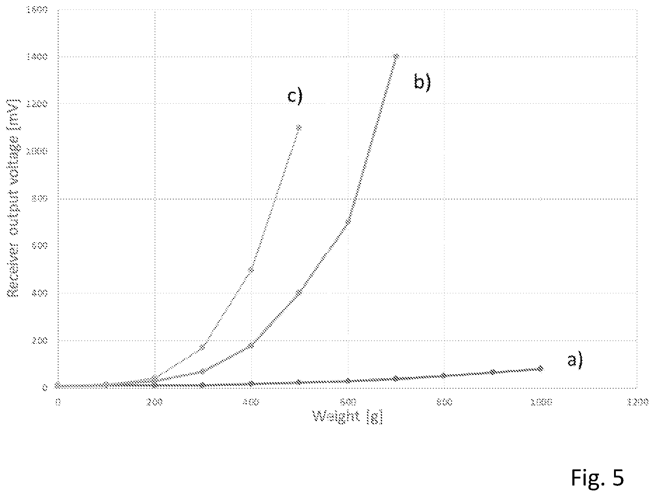

To show the influence of the flexible scattering material, first the receiver output voltage as a function of applied weight is shown without flexible material around the crossing of Fig. 2. The measurement results shown in Fig. 5 are in case both surfaces of the rigid hard PVC materials surrounding the crossing are a) black light absorbing, b) white light scattering or c) are stuck together with white sticky tape. By using white scattering material or white tape around the crossing, sensitivity is very large for larger weights. However, the output voltage of an optical receiver is always limited (in this case to about 3 Volts). This limits the pressure range in which the sensor can be used to about 600 g in case white tape is used. The output voltage versus weight curves show an exponential-like behaviour, see Fig. 5. Weights smaller than 200 g are already difficult to detect. Making the sensor less sensitive by for instance decreasing the LED output power increases the maximum weight, but makes it even more difficult to detect small weight. Therefore these exponential characteristics are not very practical. To detect a larger range, a linear or even a logarithmic characteristic is preferable.

For sensitive detection whether there is a certain pressure or not an exponential characteristic is no problem.

Experiments with sticking the fibres at the crossing together with white silicone sealant have resulted in sensitivity characteristics which were not very reproducible.

Fig. 5 is a graph of receiver output voltage as a function of applied weight without flexible material at crossing:
a) With black absorbing rigid material at both sides of crossing
b) With white scattering rigid material at both sides of crossing
c) Fibres are stuck together with white sticky tape

### B. With flexible material at the crossing

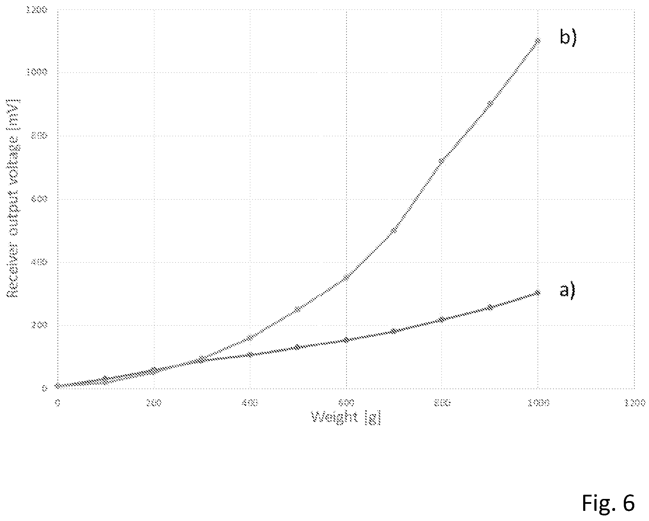

Fig. 6 shows the receiver output voltage as a function of applied weight in case a) flexible scattering material is used around the crossing at both sides as shown in Fig. 2, and b) flexible scattering material only on one side as shown in Fig. 3. Compared with the results in Fig. 5, the sensitivity for small weights has improved and the characteristics are more linear so are suitable for measuring larger pressure ranges. Because in the construction of Fig. 3, one side is flexible and the other side is rigid, more macro bending will be introduced compared with the crossing with flexible material on both sides. This explains the higher sensitivity of the second option.

Fig. 6 is a graph of receiver output voltage as a function of applied weight:
a) Flexible scattering material at both sides of crossing (according crossing of Fig. 2)
b) Flexible scattering material at one side of crossing (according crossing of Fig. 3)

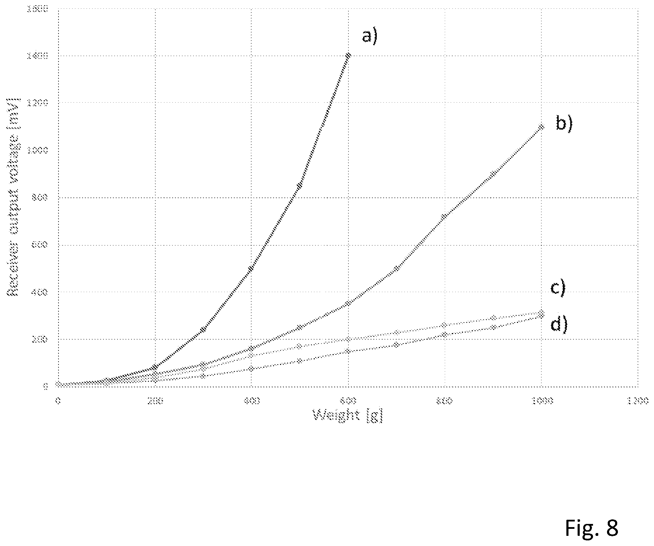

Fig. 7 and 8 show the influence of the size of the scattering material: Fig. 7 in case scattering material is used on both sides, and Fig. 8 when used only at one side. As can be seen, the size of the scattering material has influence on the shape of the sensitivity characteristic. For sensitive detection whether there is a certain pressure or not the exponential characteristics of Fig. 7(a) and Fig. 8(a) obtained using patches flexible material of 5 x 5 mm² has advantages. If a more linear characteristic is demanded patches of 10 x 10 mm² can be applied, see Fig. 7(b) and Fig. 8(b). Using larger patches, logarithmic characteristics are obtained resulting in a wider detection range, see for example Fig. 7(c) and 7(d) and Fig. 8(c) and 7(d).

Fig. 7 is a graph of receiver output voltage as a function of applied weight with flexible material at both sides (so according Fig. 2) and size of flexible material:
a) 5 x 5 mm²
b) 10 x 10 mm²
c) 15 x 15 mm²
d) 20 x 20 mm²

Fig. 8 is a graph of receiver output voltage as a function of applied weight with flexible material only on one side (so according Fig. 3) and size of flexible material:
a) 5 x 5 mm²
b) 10 x 10 mm²
c) 15 x 15 mm²
d) 20 x 20 mm²

Embodiments have been described herein able to detect 50 pressure profiles a second of a person on a mattress with a 16 x 8 POF grid so 128 crossings under the mattress.

This low-cost and robust Two-Dimensional (2D) optical pressure sensor principle can be used for many applications.
- For long-term unobtrusive and precise sleep movement monitoring in a nonclinical (home) situation.
- For monitoring precise pressure profiles of persons in bed with limited movement to prevent pressure injury (e.g., decubitus).
- In adaptive mattresses were local pressure is controlled automatically to improve sleep comfort.
- It can be applied under (or woven into) a carpet or under for instance a PVC floor for fall detection of (elderly) persons.
- In a Virtual Reality (VR) floor mat to detect the exact location of the person(s)/gamer(s) so these person(s)/gamer(s) stay in the right region.

The present invention has now been described in accordance with several exemplary embodiments, which are intended to be illustrative in all aspects, rather than restrictive. Thus, the present invention is capable of many variations in detailed implementation. All such variations are considered to be within the scope of the present invention as defined by the following claims.

## Claims

1. A two-dimensional optical waveguide pressure sensor array, comprising:
two or more row optical waveguides;
two or more column optical waveguides, wherein the row optical waveguides and the column optical waveguides are deformable and are arranged in a planar array to define a sensor in the crosspoints, wherein each crosspoint includes one of the row waveguides in direct contact with one of the column waveguides at its intersection point;
wherein each crosspoint further includes a respective light coupling structure in the shape of a patch, said coupling structure being configured to enhance waveguide bending when pressure is applied to the crosspoint;
wherein the light coupling structure comprises a layer of mechanical light scattering material disposed in contact with at least one of the row or column optical waveguide;
wherein the light coupling structure has a closed structure in which in the centre of said closed structure a deformable material is arranged, and wherein the optical waveguide pressure sensor array is configured to sense pressure by providing light to the row optical waveguides and measuring light coupled at each crosspoint to its column optical waveguide, or vice versa, and wherein the light coupled to the column optical waveguide is dependent on the pressure applied to the crosspoint acting as a sensor,
**characterized in that** the light coupling structure further comprises a layer of rigid material.

2. The two-dimensional optical waveguide pressure sensor array according to claim 1,
wherein the light coupling structure comprises two layers of light scattering material disposed in contact with and on both sides of the row and column optical waveguides wherein the row and column optical waveguides are vertically disposed between the two layers of light scattering material.

3. The two-dimensional optical waveguide pressure sensor array according to any of the previous claims,
wherein the two layers of light scattering material are substantially of the same size and shape, and are substantially laterally aligned.

4. The two-dimensional optical waveguide pressure sensor array according to any of the previous claims,
wherein each row optical waveguide includes a waveguide core surrounded by a waveguide cladding,
wherein each column optical waveguide includes a waveguide core surrounded by a waveguide cladding, wherein the waveguide claddings of both the row optical waveguides and the column optical waveguides are arranged for light transmissive contact at one or more of the crossing sensors.

5. The two-dimensional optical waveguide pressure sensor array according to any of the previous claims,
wherein each row optical waveguide includes a waveguide core surrounded by a waveguide cladding,
wherein each column optical waveguide includes a waveguide core surrounded by a waveguide cladding,
wherein the ratio of the cross sectional diameter of the waveguide core with respect to the waveguide cladding is at least 50: 1, preferably at least 75: 1, more preferably at least 90:1 and most preferably approximately 100:1.

6. The two-dimensional optical waveguide pressure sensor array according to any of the preceding claims,
wherein the layer of deformable material comprises a silicone rubber.

7. The two-dimensional optical waveguide pressure sensor array according to any of the previous claims
wherein the layer of rigid material comprises polyvinylchloride.

8. The two-dimensional optical waveguide pressure sensor array according to claim 7,
wherein the light coupling structure comprises two layers of light scattering material disposed in contact with and on both sides of the row and column optical waveguides, and two layers of rigid material disposed in contact with and on both sides of the two layers of light scattering material, vertically disposed between the row and column optical waveguides and the two layers of light scattering material with the two layers of rigid material.

9. The two-dimensional optical waveguide pressure sensor array according to any of the previous claims,
wherein the light coupling structure is shaped according to one of the group of circular, oval, rectangular, square, and polygon shaped, wherein said light coupling structure has various or corresponding sizes.

10. The two-dimensional optical waveguide pressure sensor array according to any of the previous claims,
wherein said light coupling structure has a cross-sectional diameter of approximately 0.5mm, 1.0mm, 1.5mm, 2.0mm, 2.5mm, or 3.0mm.

11. The two-dimensional optical waveguide pressure sensor array according to any of the previous claims,
wherein the row and column optical waveguides are selected from the group consisting of: step-index plastic fibers and graded-index plastic fibers.

12. The two-dimensional optical waveguide pressure sensor array according to any of the previous claims,
wherein the two-dimensional optical waveguide pressure sensor array is configured as a sleep monitoring sensor arranged under a matrass for unobtrusive measuring of sleep-related movements of an individual on the matrass.

## Patentansprüche

1. Zwei-dimensionale optische Wellenleiter Drucksensor Anordnung, umfassend:
- zwei oder mehr optische Reihen-Wellenleiter;
- zwei oder mehr optische Spalten-Wellenleiter, wobei die optischen Reihen-Wellenleiter und die optischen Spalten-Wellenleiter verformbar sind und in einer planaren Anordnung angeordnet sind, um einen Sensor an den Kreuzungspunkten zu definieren, wobei jeder Kreuzungspunkt einen der Reihen-Wellenleiter in direktem Kontakt mit einem der Spalten-Wellenleiter an seinem Schnittpunkt umfasst;
wobei jeder Kreuzungspunkt ferner eine jeweilige Lichtkopplungsstruktur in Form eines Besatzes umfasst, wobei die Kopplungsstruktur so konfiguriert ist, dass sie die Wellenleiterbiegung verstärkt, wenn Druck auf den Kreuzungspunkt ausgeübt wird;
wobei die Lichtkopplungsstruktur eine Lage aus mechanisch lichtstreuendem Material umfasst, das in Kontakt mit mindestens einem der optischen Reihen-Wellenleiter oder Spalten-Wellenleiter angeordnet ist;
wobei die Lichtkopplungsstruktur eine geschlossene Struktur aufweist, in der im Zentrum der geschlossenen Struktur ein verformbares Material angeordnet ist, und wobei die optische Wellenleiter Drucksensor Anordnung so konfiguriert ist, dass sie Druck erfasst, indem sie Licht an die optischen Reihen-Wellenleiter bereitstellt und das an jedem Kreuzungspunkt zu seinem optischen Spalten-Wellenleiter gekoppelte Licht misst, oder umgekehrt, und wobei das an den optischen Spalten-Wellenleiter gekoppelte Licht von dem an den Kreuzungspunkt angelegten Druck abhängig ist, der also Sensor fungiert,
dadurch charakterisiert, dass die Lichtkopplungsstruktur ferner eine Lage aus starrem Material umfasst.

2. Zwei-dimensionale optische Wellenleiter Drucksensor Anordnung nach Anspruch 1,
wobei die Lichtkopplungsstruktur zwei Lagen aus lichtstreuendem Material umfasst, angeordnet in Kontakt mit und an beiden Seiten der optischen Reihen-Wellenleiter und optischen Spalten-Wellenleiter, wobei die optischen Reihen-Wellenleiter und optischen Spalten-Wellenleiter vertikal zwischen den beiden Lagen des lichtstreuenden Materials angeordnet sind.

3. Zwei-dimensionale optische Wellenleiter Drucksensor Anordnung nach einem der vorhergehenden Ansprüche,
wobei die zwei Lagen aus lichtstreuendem Material im Wesentlichen dieselbe Größe und Form haben, und im Wesentlichen lateral ausgerichtet sind.

4. Zwei-dimensionale optische Wellenleiter Drucksensor Anordnung nach einem der vorhergehenden Ansprüche,
wobei jeder optische Reihen-Wellenleiter einen Wellenleiterkern umfasst, der von einem Wellenleitermantel umgeben ist,
wobei jeder optische Spalten-Wellenleiter einen Wellenleiterkern umfasst, der von einem Wellenleitermantel umgeben ist, wobei die Wellenleitermantel sowohl der optischen Reihen-Wellenleiter als auch der optischen Spalten-Wellenleiter für einen lichtdurchlässigen Kontakt an einem oder mehreren der Kreuzungssensoren arrangiert sind.

5. Zwei-dimensionale optische Wellenleiter Drucksensor Anordnung nach einem der vorhergehenden Ansprüche,
wobei jeder optische Reihen-Wellenleiter einen Wellenleiterkern umgeben von einem Wellenleitermantel umfasst,
wobei jeder optische Spalten-Wellenleiter einen Wellenleiterkern umgeben von einem Wellenleitermantel umfasst,
wobei das Verhältnis des Querschnittsdurchmessers des Wellenleiterkerns zum Wellenleitermantel mindestens 50:1, vorzugsweise mindestens 75:1, besonders vorzugsweise mindestens 90:1, und ganz besonders vorzugsweise ungefähr 100:1 beträgt.

6. Zwei-dimensionale optische Wellenleiter Drucksensor Anordnung nach einem der vorhergehenden Ansprüche,
wobei die Lage aus verformbaren Material einen Silikonkautschuk umfasst.

7. Zwei-dimensionale optische Wellenleiter Drucksensor Anordnung nach einem der vorhergehenden Ansprüche,
wobei die Lage aus starrem Material Polyvinylchlorid umfasst.

8. Zwei-dimensionale optische Wellenleiter Drucksensor Anordnung nach Anspruch 7,
wobei die Lichtkopplungsstruktur zwei Lagen aus lichtstreuendem Material angeordnet in Kontakt mit und an beiden Seiten der optischen Reihen-Wellenleiter und optischen Spalten-Wellenleiter, und zwei Lagen aus starrem Material angeordnet in Kontakt mit und auf beiden Seiten der zwei Lagen aus lichtstreuendem Material, vertikal zwischen den optischen Reihen-Wellenleitern und optischen Spalten-Wellenleitern und den zwei Lagen aus lichtstreuendem Material mit den zwei Lagen aus starrem Material umfasst.

9. Zwei-dimensionale optische Wellenleiter Drucksensor Anordnung nach einem der vorhergehenden Ansprüche,
wobei die Lichtkopplungsstruktur entsprechend einer aus der Gruppe kreisförmig, oval, rechteckig, quadratisch oder polygonal geformt ist, wobei die Lichtkopplungsstruktur verschiedene oder entsprechende Größen aufweist.

10. Zwei-dimensionale optische Wellenleiter Drucksensor Anordnung nach einem der vorhergehenden Ansprüche,
wobei die Lichtkopplungsstruktur einen Querschnittsdurchmesser von ungefähr 0.5 mm, 1.0 mm, 1.5 mm, 2.0 mm, 2.5 mm, oder 3.0 mm aufweist.

11. Zwei-dimensionale optische Wellenleiter Drucksensor Anordnung nach einem der vorhergehenden Ansprüche,
wobei die optischen Reihen-Wellenleiter und die optische Spalten-Wellenleiter ausgewählt sind aus der Gruppe bestehend aus: Stufenindex Kunststofffasern und Gradientenindex Kunststoffasern.

12. Zwei-dimensionale optische Wellenleiter Drucksensor Anordnung nach einem der vorhergehenden Ansprüche,
wobei die zwei-dimensionale optische Wellenleiter Drucksensor Anordnung konfiguriert ist als Schlaf-Aufzeichnungssensor arrangiert unter einer Matratze zum unauffälligen Messen der schlafbezogenen Bewegungen eines Individuums auf der Matratze.

## Revendications

1. Réseau de capteurs de pression à guides d'ondes optiques bidimensionnels, comprenant:
deux guides d'ondes optiques en rangée ou plus;
deux ou plusieurs guides d'ondes optiques en colonnes, dans lequel les guides d'ondes optiques en rangées et les guides d'ondes optiques en colonnes sont déformables et sont disposés dans un réseau plan pour définir un capteur dans les points d'intersection, dans lequel chaque point d'intersection comprend l'un des guides d'ondes en rangées en contact direct avec l'un des guides d'ondes en colonnes à son point d'intersection;
dans lequel chaque point d'intersection comprend en outre une structure de couplage de lumière respective en forme de patch, ladite structure de couplage étant configurée pour améliorer la flexion du guide d'ondes lorsqu'une pression est appliquée au point d'intersection;
dans lequel la structure de couplage de lumière comprend une couche de matériau mécanique diffusant la lumière disposée en contact avec au moins l'un des guides d'ondes optiques de rangée ou de colonne;
dans lequel la structure de couplage de lumière a une structure fermée dans laquelle, au centre de ladite structure fermée, un matériau déformable est disposé, et dans lequel le réseau de capteurs de pression à guide d'ondes optiques est configuré pour détecter la pression en fournissant de la lumière aux guides d'ondes optiques de rangée et en mesurant la lumière couplée à chaque point de croisement à son guide d'ondes optique de colonne, ou vice versa, et dans lequel la lumière couplée au guide d'ondes optique de colonne dépend de la pression appliquée au point de croisement agissant comme un capteur,
**caractérisé en ce que** la structure de couplage de lumière comprend en outre une couche de matériau rigide.

2. Réseau de capteurs de pression à guides d'ondes optiques bidimensionnels selon la revendication 1,
dans lequel la structure de couplage de lumière comprend deux couches de matériau diffusant la lumière disposés en contact avec et des deux côtés des guides d'ondes optiques en rangées et en colonnes, les guides d'ondes optiques en rangées et en colonnes étant disposés verticalement entre les deux couches de matériau diffusant la lumière.

3. Réseau de capteurs de pression à guides d'ondes optiques bidimensionnels selon l'une quelconque des revendications précédentes,
dans lequel les deux couches de matériau diffusant la lumière sont sensiblement de même taille et de même forme, et sont sensiblement alignées latéralement.

4. Réseau de capteurs de pression à guides d'ondes optiques bidimensionnels selon l'une quelconque des revendications précédentes,
dans lequel chaque guide d'onde optique de rangée comprend un cœur de guide d'onde entouré d'une gaine de guide d'onde, dans lequel chaque guide d'onde optique de colonne comprend un cœur de guide d'onde entouré d'une gaine de guide d'onde,
dans lequel les gaines de guide d'onde des guides d'onde optiques de rangée et des guides d'onde optiques de colonne sont agencées pour un contact transmettant la lumière au niveau d'un ou plusieurs des capteurs de croisement.

5. Réseau de capteurs de pression à guides d'ondes optiques bidimensionnels selon l'une quelconque des revendications précédentes,
dans lequel chaque guide d'onde optique de rangée comprend un cœur de guide d'onde entouré d'une gaine de guide d'onde,
dans lequel chaque guide d'onde optique de colonne comprend un cœur de guide d'onde entouré d'une gaine de guide d'onde,
dans lequel le rapport entre le diamètre transversal du cœur du guide d'onde et celui de la gaine du guide d'onde est d'au moins 50:1, de préférence d'au moins 75:1, plus préférablement d'au moins 90:1 et de manière encore plus préférable d'environ 100:1.

6. Réseau de capteurs de pression à guides d'ondes optiques bidimensionnels selon l'une quelconque des revendications précédentes,
dans lequel la couche de matériau déformable comprend un caoutchouc de silicone.

7. Réseau de capteurs de pression à guides d'ondes optiques bidimensionnels selon l'une quelconque des revendications précédentes,
dans lequel la couche de matériau rigide comprend du chlorure de polyvinyle.

8. Réseau de capteurs de pression à guides d'ondes optiques bidimensionnels selon la revendication 7,
dans lequel la structure de couplage de lumière comprend deux couches de matériau diffusant la lumière disposées en contact avec et des deux côtés des guides d'ondes optiques en rangées et en colonnes, et deux couches de matériau rigide disposées en contact avec et des deux côtés des deux couches de matériau diffusant la lumière, disposées verticalement entre les guides d'ondes optiques en rangées et en colonnes et les deux couches de matériau diffusant la lumière avec les deux couches de matériau rigide.

9. Réseau de capteurs de pression à guides d'ondes optiques bidimensionnels selon l'une quelconque des revendications précédentes,
dans lequel la structure de couplage de lumière est formée selon l'une des formes suivantes: circulaire, ovale, rectangulaire, carrée et polygonale, dans lequel ladite structure de couplage de lumière a des tailles diverses ou correspondantes.

10. Réseau de capteurs de pression à guides d'ondes optiques bidimensionnels selon l'une quelconque des revendications précédentes,
dans lequel ladite structure de couplage de lumière a un diamètre en coupe transversale d'environ 0,5 mm, 1,0 mm, 1,5 mm, 2,0 mm, 2,5 mm ou 3,0 mm.

11. Réseau de capteurs de pression à guides d'ondes optiques bidimensionnels selon l'une quelconque des revendications précédentes,
dans lequel les guides d'ondes optiques en rangées et en colonnes sont choisis parmi le groupe comprenant: des fibres plastiques à indice progressif et des fibres plastiques à indice gradué.

12. Réseau de capteurs de pression à guides d'ondes optiques bidimensionnels selon l'une quelconque des revendications précédentes,
dans lequel le réseau de capteurs de pression à guide d'onde optique bidimensionnel est configuré comme un capteur de surveillance du sommeil disposé sous un matelas pour mesurer de manière discrète les mouvements liés au sommeil d'une personne sur le matelas.
